# EUROPÄISCHE PATENTSCHRIFT

(11) **EP 2 613 967 B1**
(45) Veröffentlichungstag und Bekanntmachung des Hinweises auf die Patenterteilung: **30.07.2014**
(21) Anmeldenummer: 11758393.0
(22) Anmeldetag: 09.09.2011
(51) Int. Cl.: B60N 2/02, F16M 13/02, B60N 2/48, B60N 2/16, B60N 2/46

(54) **VERSTELLMECHANISMUS INSBESONDERE IM INNENAUSSTATTUNGSBEREICH EINES KRAFTFAHRZEUGES**
ADJUSTING MECHANISM, IN PARTICULAR IN THE INTERIOR FITTINGS AREA OF A MOTOR VEHICLE
MÉCANISME DE RÉGLAGE, EN PARTICULIER DANS LA ZONE D'ÉQUIPEMENT INTÉRIEUR D'UN VÉHICULE AUTOMOBILE

(30) Priorität: 10.09.2010 DE 102010044946
(43) Veröffentlichungstag der Anmeldung: 17.07.2013
(73) Patentinhaber: Johnson Controls GmbH, 51399 Burscheid (DE)
(72) Erfinder: FROTZ, Thomas, 51399 Burscheid (DE); HEMMELRATH, Rudolf, 51377 Leverkusen (DE)
(74) Vertreter: Wolff, Felix
(86) Internationale Anmeldenummer: PCT/EP2011/004552
(87) Internationale Veröffentlichungsnummer: WO 2012/031772

(56) Entgegenhaltungen:
- WO-A1-2006/037801
- WO-A2-2007/056640
- DE-B3-102006 036 623
- DE-B3-102007 041 495
- FR-A1- 2 927 581

## Beschreibung

Die vorliegende Erfindung betrifft einen Verstellmechanismus zur Linearverstellung insbesondere eines Kraftfahrzeugsinnenausstattungsbauteils mit einer Tragstruktur die relativ zu einemBasiselement bewegbar ist, wobei zwischen der Tragstruktur und dem Basiselement eine Vielzahl von Stegpaaren vorgesehen ist und wobei sich der Winkel der Stege jedes Stegpaares zueinander bei der Bewegung der Tragstruktur verändert, (siehe z.B. WO 2006/037801 A1).

Derartige Verstellmechanismen werden im Automobilbau beispielsweise im Bereich von Kopfstützen eingesetzt. Die Verstellung der Kopfstütze erfolgt in der Regel manuell und dient dazu, den Komfort und/oder die Sicherheit des Sitzinsassen zu erhöhen. Die Verstellung bzw. der Verstellmechanismus muss möglichst einfach und kostengünstig durch- und herstellbar, gleichzeitig aber auch sehr robust sein.

Es war deshalb die Aufgabe der vorliegenden Erfindung, einen Verstellmechanismus zur Verfügung zu stellen, der diese Eigenschaften aufweist.

Gelöst wird die Aufgabe mit einem Verstellmechanismus mit den Merkmalen des Anspruchs 1.

Der erfindungsgemäße Verstellmechanismus eignet sich für jegliche Linearverstellung aber auch für eine Verstellung entlang einer leicht gekrümmten Wegstrecke.

Die vorliegende Erfindung betrifft einen Verstellmechanismus, der beispielsweise an der Karosserie eines Kraftfahrzeuges oder an einem weiteren Innenausstattungsteil eines Kraftfahrzeuges, beispielsweise einem Fahrzeugsitz oder der Innenverkleidung des Kraftfahrzeuges vorgesehen ist.

Die Tragstruktur dieses Verstellmechanismus ist nun relativ zu einem Basiselement, insbesondere rein translatorisch, bewegbar. Dafür ist zwischen der Tragstruktur und dem Basiselement eine Vielzahl von Stegpaaren vorgesehen, wobei sich der Winkel der Stege jedes Stegpaares zueinander bei der Bewegung der Tragstruktur verändert.

Vorzugsweise ist das Basiselement fest vorgesehen, beispielsweise mit der Karosserie oder einem anderen Fahrzeuginnenausstattungsteil verbunden. Es ist jedoch auch möglich, dass das Basisteil beweglich vorgesehen ist, wobei diese Bewegung vorzugsweise unabhängig von der Bewegung der Tragstruktur erfolgt und besonders bevorzugt in einem Winkel zu dieser vorgesehen ist.

Vorzugsweise ist der Verstellmechanismus zumindest teilweise, besonders bevorzugt vollständig aus Kunststoff gefertigt. Besonders bevorzugt handelt es sich um ein Spritz- oder Spritz/Gieß-Teil.

Besonders bevorzugt ist der Verstellmechanismus, insbesondere zumindest das Basiselement, die Tragstruktur und das/die Stegpaar(e), einstückig vorgesehen.

Erfindungsgemäß ist zwischen den Stegen selbst und/oder zwischen dem Steg und dem Basiselement und/oder der Tragstruktur jeweils ein Filmscharnier vorgesehen. Der Steg dreht sich jeweils um ein solches Filmscharnier. Vorzugsweise ist die Drehachse jedes Filmscharniers senkrecht zur Bewegungsrichtung der Tragstruktur vorgesehen.

Erfindungsgemäß sind mindestens zwei Stegpaare durch einen Ausgleichshebel miteinander verbunden, der die Bewegung von zwei Stegpaaren synchronisiert. Dabei wird verhindert, dass sich die Tragstruktur bei ihrer Bewegung verkantet.

Erfindungsgemäß weist das Basiselement eine erste und eine zweite Seite auf, wobei auf jeder Seite jeweils Stegpaare vorgesehen sind. Diese Ausführungsform ist besonders steif. Vorzugsweise sind die Stegpaare auf beiden Seiten des Basiselements jeweils durch einen Ausgleichshebel miteinander verbunden. Weiterhin bevorzugt sind die beiden Ausgleichshebel miteinander synchronisiert. Dies erfolgt vorzugsweise durch mindestens ein Verbindungsmittel zwischen den Ausgleichshebeln. Vorzugsweise sind die Enden dieses Verbindungsmittels jeweils über ein Filmscharnier jeweils mit einem der Ausgleichshebel verbunden.

Der erfindungsgemäße Verstellmechanismus kann für jede lineare oder leicht gekrümmte Verstellung eines Bauteils eingesetzt werden.

Vorzugsweise ist der Verstellmechanismus Teil der Innenausstattung eines Kraftfahrzeuges und kann dort für jede lineare oder leicht gekrümmte Verstellung eines Bauteils eingesetzt werden.

Besonders bevorzugt ist der Verstellmechanismus Teil einer Kopfstütze. Bei dieser Ausführungsform ist das Basiselement vorzugsweise mittels einer oder mehrerer Stangen an der Rückenlehne eines Kraftfahrzeugsitzes vorgesehen. Die Tragstruktur kann zu Komfortzwecken oder aus Sicherheitsgründen zum Kopf eines Sitzinsassen hin und davon weg bewegt werden. Vorzugsweise ist die Kopfstütze höhenverstellbar und/oder winkelverstellbar vorgesehen, um an die Körpergröße des jeweiligen Sitzinsassen angepasst werden zu können. Die Tragstruktur ist in der Regel mit einem Bezug und/oder einer Polsterung versehen. Für den Fall, dass die Stege mit einem oder mehreren Filmscharnieren an dem Basiselement, der Tragstruktur und/oder dem Ausgleichshebel angeordnet sind, ist die Drehachse jedes dieser Filmscharniere ganz besonders bevorzugt im Wesentlichen parallel oder senkrecht zu den Haltestangen ausgerichtet.

Erfindungsgemäß weist das Basiselement eine erste und eine zweite Seite auf, wobei auf jeder Seite jeweils Stegpaare vorgesehen sind. Die beiden Seiten sind vorzugsweise parallel zu den Haltestangen vorgesehen.

Gemäß einer weiteren bevorzugten Ausführungsform ist der Verstellmechanismus Teil eines Displays, mit dem die Position des Displays beispielsweise relativ zu einem Fahrzeuginnenausstattungsteil, insbesondere der Innenverkleidung, verstellbar ist. Das Basisteil wird dabei vorzugsweise mit der Innenausstattung und die Tragstruktur vorzugsweise mit dem Display verbunden.

Gemäß einer weiteren bevorzugten Ausführungsform ist der Verstellmechanismus die Höhenverstellung eines Fahrzeugsitzes. Das Basisteil wird dabei vorzugsweise direkt oder indirekt mit der Karosserie des Fahrzeuges und die Tragstruktur mit dem Fahrzeugsitz verbunden.

Gemäß noch einer weiteren bevorzugten Ausführungsform ist der Verstellmechanismus Teil der Linearverstellung einer Armlehne. Das Basisteil wird dabei vorzugsweise direkt oder indirekt mit der Karosserie oder der Verkleidung des Fahrzeuges und die Tragstruktur mit der Armlehne verbunden.

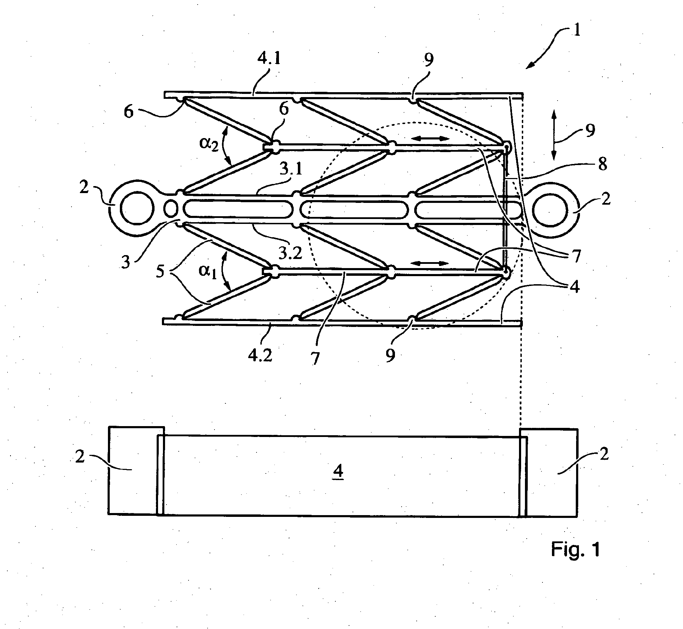

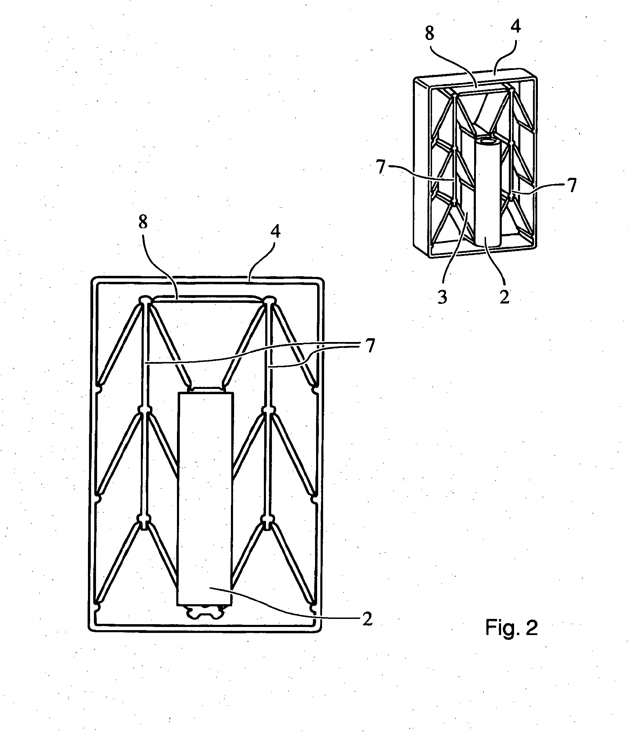

Im Folgenden wird die Erfindung anhand der Figuren 1 und 2 erläutert. Diese Erläuterungen sind lediglich beispielhaft und schränken den allgemeinen Erfindungsgedanken nicht ein.
Figur 1 zeigt eine erste Ausführungsform des erfindungsgemäßen Verstellmechanismus.
Figur 2 zeigt eine zweite Ausführungsform des erfindungsgemäßen Verstellmechanismus.

Figur 1 zeigt den erfindungsgemäßen Verstellmechanismus beispielsweise als Teil einer Kopfstütze 1. Der Verstellmechanismus weist ein Basiselement 3, hier eine Platte, auf, an deren Enden rechts und links jeweils die Aufnahme für jeweils eine Haltestange vorgesehen ist. Des Weiteren weist der erfindungsgemäße Verstellmechanismus eine Tragstruktur 4 auf, die in dem vorliegenden Fall zumindest aus einer Vorderplatte 4.1 und einer Hinterplatte 4.2 besteht, deren Abstand bei allen Verstellvorgängen unverändert bleibt und die einstückig vorgesehen sein können. Das Basiselement weist eine erste Seite 3.1, die in dem vorliegenden Fall parallel zu der Vorderplatte 4.1 ausgerichtet ist, und eine zweite Seite 3.2, die in dem vorliegenden Fall parallel zu der Hinterplatte ausgerichtet ist, auf. Zwischen den beiden Seiten 3.1, 3.2 und der Vorderplatte 4.1 bzw. der Hinterplatte 4.2 sind nun jeweils mehrere, hier drei, Stegpaare 5 parallel zueinander angeordnet. Jedes Stegpaar besteht aus zwei Stegen, die jeweils an ihrem einen Ende mit dem Basiselement 3 bzw. der Vorder- 4.1 oder der Hinterplatte 4.2 und mit ihrem anderen Ende jeweils mit einem Ausgleichshebel 7 verbunden sind. Die Verbindung mit dem Basiselement, der Vorder- / Hinterplatte bzw. dem Ausgleichshebel erfolgt jeweils durch Filmscharniere. Soll nun beispielsweise die Vorderplatte 4.1 in Richtung des Kopfes des Sitzinsassen bewegt werden, so zieht der Sitzinsasse an der Tragstruktur 4 insbesondere an der Vorderplatte 4.1. Dabei vergrößert sich gleichzeitig der Winkel α₂ und es verkleinert sich der Winkel α₁, so dass der Abstand zwischen der Vorderplatte 4.1 und der Hinterplatte 4.2 bei der Bewegung konstant bleibt, sich der Abstand zwischen der Vorderplatte 1 und dem Basiselement jedoch vergrößert. Soll die Tragstruktur relativ zu dem Basiselement vom Kopf des Sitzinsassen wegbewegt werden, vergrößert sich der Winkel α₁ und verkleinert sich der Winkel α₂. Die Stegpaare, die zwischen der ersten Seite 3.1 des Basiselements und der Vorderplatte 4.1 vorgesehen sind, und die Stegpaare, die zwischen der zweiten Seite 3.2 des Basiselements und der Hinterplatte 4.2 vorgesehen sind, sind jeweils durch einen Ausgleichshebel 7 miteinander verbunden, der die Bewegung der Stegpaare jeweils auf einer Seite des Basiselementes vereinheitlicht. In einer bevorzugten Ausführungsform sind diese Ausgleichshebel 7 zusätzlich noch durch einen Synchronisationshebel 8 miteinander verbunden. Vorzugsweise sind das Basiselement 1, die Stege 5, die Tragstruktur 4 und die Ausgleichshebel 7 einstückig vorgesehen und/oder insbesondere als Spritzteil aus Kunststoff gefertigt. Vorzugsweise ist der gesamte dargestellte Verstellmechanismus aus Kunststoff gefertigt. Besonders bevorzugt ist der dargestellte Verstellmechanismus, zumindest bis auf den Synchronisationshebel 8, einstückig, insbesondere als ein Kunststoffteil ausgeführt.

**Figur 2** zeigt eine weitere Ausführungsform des erfindungsgemäßen Verstellmechanismus in zwei Ansichten. Der Verstellmechanismus gemäß Figur 2 entspricht im Wesentlichen der Ausführungsform gemäß Figur 1, so dass auf die dort gemachten Ausführungen Bezug genommen werden kann. In dem vorliegenden Fall sind die Filmscharniere in einem 90° Winkel zur Längserstreckung der Haltestangen, d.h. auch im Vergleich zur Ausführungsform gemäß Figur 1, um 90° gedreht und der Synchronisationshebel 8 ist ebenfalls mittels Filmscharnieren mit den Ausgleichshebeln 7 verbunden. Der gesamte dargestellte Verstellmechanismus ist in einem Stück, vorzugsweise als Kunststoffteil, gefertigt.

### Bezugszeichenliste:

- 1: Verstellmechanismus
- 2: Aufnahme für Haltestange
- 3: Basiselement, Basisplatte
- 3.1: erste Seite des Basiselementes
- 3.2: zweite Seite des Basiselementes
- 4: Tragstruktur, Kopfstützkasten
- 4.1: Vorderplatte
- 4.2: Hinterplatte
- 5: Steg, Stegpaar
- 6: Scharnier, Filmscharnier
- 7: Ausgleichshebel
- 8: Synchronisation
- 9: Drehachse
- α: Winkel

## Patentansprüche

1. Verstellmechanismus (1) zur Linearverstellung, insbesondere eines Kraftfahrzeugsinnenausstattungsbauteils, mit einer Tragstruktur (4), die relativ zu einem Basiselement (3) bewegbar ist, wobei zwischen der Tragstruktur (4) und dem Basiselement (3) eine Velzahl von Stegpaaren (5) vorgesehen ist, wobei sich der Winkel (α) der Stege jedes Stegpaares (5) zueinander bei der Bewegung der Tragstruktur (4) verändert, **dadurch gekennzeichnet, dass** zwischen den Stegen und dem Basiselement (3) und/oder der Tragstruktur (4) ein Filmscharnier vorgesehen ist, wobei zwei Stegpaare (5) durch einen Ausgleichshebel (7) miteinander verbunden sind, wobei das Basiselement eine erste Seite (3.1) und eine zweite Seite (3.2) aufweist und auf beiden Seiten Stegpaare (5) vorgesehen sind.

2. Verstellmechanismus (1) nach Anspruch 1, **dadurch gekennzeichnet, dass** das Basiselement (3), die Stege (5), die Tragstruktur (4) und die Filmscharniere einstückig, vorzugsweise aus Kunststoff, vorgesehen sind.

3. Verstellmechanismus (1) nach einem der voranstehenden Ansprüche, **dadurch gekennzeichnet, dass** die Drehachse (9) der Stege (5) senkrecht zu der Bewegung der Tragstruktur vorgesehen ist.

4. Verstellmechanismus (1) nach einem der voranstehenden Ansprüche, **dadurch gekennzeichnet, dass** die Stegpaare (5) auf beiden Seiten (3.1, 3.2) des Basiselementes (3) jeweils durch einen Ausgleichshebel (7) miteinander verbunden sind.

5. Verstellmechanismus (1) nach Anspruch 4, **dadurch gekennzeichnet, dass** die Ausgleichshebel (7) synchronisiert sind.

6. Verstellmechanismus nach einem der voranstehenden Ansprüche, **dadurch gekennzeichnet, dass** er Teil einer Kopfstütze ist.

## Claims

1. Adjusting mechanism (1) for linear adjustment, in particular of a motor vehicle interior fittings component, with a supporting structure (4) which can be moved relative to a base element (3), wherein a plurality of web pairs (5) are provided between the supporting structure (4) and the base element (3), wherein the angle (α) of the webs of each web pair (5) to one another changes during the movement of the supporting structure (4), **characterized in that** a film hinge is provided between the webs and the base element (3) and/or the supporting structure (4), wherein two web pairs (5) are connected to one another by a compensating lever (7), wherein the base element has a first side (3.1) and a second side (3.2) and web pairs (5) are provided on both sides.

2. Adjusting mechanism (1) according to Claim 1, **characterized in that** the base element (3), the webs (5), the supporting structure (4) and the film hinges are provided in one piece, preferably from plastic.

3. Adjusting mechanism (1) according to one of the preceding claims, **characterized in that** the axis of rotation (9) of the webs (5) is provided perpendicularly to the movement of the supporting structure.

4. Adjusting mechanism (1) according to one of the preceding claims, **characterized in that** the web pairs (5) on both sides (3.1, 3.2) of the base element (3) are in each case connected to one another by a compensating lever (7).

5. Adjusting mechanism (1) according to Claim 4, **characterized in that** the compensating levers (7) are synchronized.

6. Adjusting mechanism according to one of the preceding claims, **characterized in that** it is part of a head restraint.

## Revendications

1. Mécanisme de réglage (1) pour le réglage linéaire, en particulier d'un composant d'équipement intérieur de véhicule automobile, comprenant une structure porteuse (4) qui peut être déplacée par rapport à un élément de base (3), une pluralité de paires d'éléments de liaison (5) étant prévues entre la structure porteuse (4) et l'élément de base (3), l'angle (α) des éléments de liaison de chaque paire d'éléments de liaison (5) l'un par rapport à l'autre changeant lors du déplacement de la structure porteuse (4), **caractérisé en ce qu'**une charnière film est prévue entre les éléments de liaison et l'élément de base (3) et/ou la structure porteuse (4), deux paires d'éléments de liaison (5) étant reliées l'une à l'autre au moyen d'un levier de compensation (7), l'élément de base comprenant un premier côté (3.1) et un deuxième côté (3.2) et des paires d'éléments de liaison (5) étant prévues sur les deux côtés.

2. Mécanisme de réglage (1) selon la revendication 1, **caractérisé en ce que** l'élément de base (3), les éléments de liaison (5), la structure porteuse (4) et les charnières film sont prévus d'une seule pièce, de préférence en plastique.

3. Mécanisme de réglage (1) selon l'une quelconque des revendications précédentes, **caractérisé en ce que** l'axe de rotation (9) des éléments de liaison (5) est prévu de manière perpendiculaire au déplacement de la structure porteuse.

4. Mécanisme de réglage (1) selon l'une quelconque des revendications précédentes, **caractérisé en ce que** les paires d'éléments de liaison (5) sur les deux côtés (3.1, 3.2) de l'élément de base (3) sont respectivement reliées les unes aux autres au moyen d'un levier de compensation (7).

5. Mécanisme de réglage (1) selon la revendication 4, **caractérisé en ce que** les leviers de compensation (7) sont synchronisés.

6. Mécanisme de réglage selon l'une quelconque des revendications précédentes, **caractérisé en ce qu'**il fait partie d'un appui-tête.
